# EUROPEAN PATENT SPECIFICATION

(11) **EP 4 282 253 B1**
(45) Date of publication and mention of the grant of the patent: **19.03.2025**
(21) Application number: 22174780.1
(22) Date of filing: 23.05.2022
(51) Int. Cl.: A01F 15/10, A01D 90/04

(54) **CROP CUTTING DEVICE**
ERNTEGUTSCHNEIDEVORRICHTUNG
DISPOSITIF DE COUPE DE RÉCOLTE

(43) Date of publication of application: 29.11.2023
(73) Proprietor: CNH Industrial Belgium N.V., 8210 Zedelgem (BE)
(72) Inventor: DEWITTE, Tomas H., 8890 Moorslede (BE); LIEFOOGHE, Dries, 8690 Alveringem (BE)
(74) Representative: CNH Industrial IP Department

(56) References cited:
- EP-A1- 2 653 025
- EP-A1- 3 053 429
- EP-A1- 3 628 144
- EP-A2- 2 979 535

## Description

The present invention relates to a crop cutting device for agricultural machines or implements.

Agricultural machines or implements such as balers or self-loading wagons are often equipped with a cutting device equipped to shred the cut crop for different purposes. Other agricultural machines such as harvesters may also be equipped with such a cutting device.

The cutting device is usually arranged in crop channel of the baler, the loading wagon or other agricultural machine so that the crop is transported on a crop guiding surface towards a plurality of knives to be cut in contact with the knives' blades.

With regard to the crop channel, such crop cutting devices include a plurality of knives arranged side-by-side in rows, wherein the number of knives protruding next to one another from the crop guiding surface into the crop channel dictates the number of effective blades or edges and thus an achievable length of the cut crop. It is generally desirable to be able to select and use different numbers of blades to adapt to the particular application or harvesting conditions.

To protect the knives from damages by stones or other unwanted particles that are generally not shreddable or choppable and to enable a selection of a desired number of knives, it is customary for the knives to be pivotable relative to a frame of the cutting device so that each knife can be pivoted between a non-operating position and an operating position. In the non-operating position, however, the knife is in a position in which it is largely withdrawn from the crop channel, unable to cut crop. In the operating position, the knife is in a position in which it protrudes into the crop channel so that crop flowing past is crushed or cut in cooperation with the knife. For clamping and subsequent holding of the knife in the operating position each knife is associated with an operating or clamping unit, which has, for example, a spring element. A common, moveable actuator is used to pivot the operating units together with the respective knife from the non-operating position into the operating position and vice versa. In view of the increasing number of installed knives in cutting devices as well as the high-acting forces, the back-and-forth movement of the knives presents a mechanical challenge.

DE 43 02 199 A1 discloses a crop cutting device including chopping knives protruding into a conveyor passage and cooperating with tines on a rotor. The knives are held in the working position by controlled supports, which release them together or individually to swing into the idle position. An elastic overload-protection system also allows the knives to swing briefly into this position on encountering foreign bodies. Each support consists of a spring-loaded thrust rod, engaging at one end in a positioning recess in its respective knife. The rods are supported by their springs on a common connecting cross-member, which is slid by one or more rams in relation to the knives. With its spring each thrust rod forms an overload-protection mechanism movable in relation to the cross-member. Each thrust rod is further coupled to a bar releasing or retaining it, so as to cut its knife in and out of use. The bar is provided with a downwardly protruding cam which is brought into and out of engagement with an edge of an opening by a lifting cam on a rotatable control shaft which cooperates with the bar.

DE 198 05 854 C1 discloses a crop cutting device in which each pivotable knife is operable by a spring loaded sliding bar carrying a roller. The end of each sliding bar carrying the roller is supported by an arm that is rotatable about a shaft. Some of the sliding bars have their support arms extend to various depths below the shaft. A blocking bar extending parallel to the shaft may be raised to different heights to bring it into blocking engagement with the extended arms of the various sliding bars, to block pivoting movement of the corresponding knife.

EP 2 653 025 A1 discloses a cutting device which includes a cam shaft that is operable to lift selected spring loaded arms from a first position in which they are bypassed by an actuator into a second position in which they are engaged by the actuator and brought into contact with respective knives. In this way only selected knives are extended. In the retracted position the knives still protrude slightly from the slotted plate in which they are arranged, thus forming an obstacle to the flow of the crop. This prior art device is fairly complex and in view of the very dusty environment is prone to failure as the spring loaded arms are repeatedly disengaged and the re-engaged by the actuator.

EP 2 110 014 A1 discloses a cutting device comprising a selection shaft that is received in circular openings in levers operating the knives. A narrow channel leads from an edge of each knife to each circular opening. The selection shaft has locally flattened parts which fit in the channels. By rotating the selection shaft it can either be locked in a circular recess to disable the corresponding knife or allowed to pass through the channel when the knife is moved to its extended position. In the retracted position, the knives are completely hidden under the lower wall of the crop inlet channel, thus rendering them inaccessible for maintenance or replacement. The design of this prior art device requires a relatively large space and the levers and shaft have relatively complex shapes. Moreover, the repeated movement of the shaft through the narrow channels is prone to jamming.

EP 1 609 354 A1 discloses a crop cutting device for harvested crop which includes a selector mechanism having blocking tabs. These tabs cooperate with roll pins extending crosswise through support rods engaging the knives. The blocking tabs are integrated into four separate strips fixed on a cylindrical tube. The tube can be lowered or raised to engage or disengage the blocking tabs. Here, the retracted knives still protrude slightly from the slotted plate in which they are arranged, thus impeding the flow of the crop. Since the tabs are arranged in strips they have a fixed spacing and cannot be rearranged by a user.

A further crop cutting device is known from document EP 3 053 429 A1.

It is therefore the object of the present invention to provide a crop cutting device which overcomes at least some of the disadvantages of the prior art as listed above, which enables a smooth, safe and remotely controllable knife selection, which requires little installation space and which generally ensures a reliable and secure cutting function also in a very dusty environment.

This object is achieved by the subject matter of independent claim 1 of the present invention. Advantageous embodiments and aspects are described in the dependent claims.

According to one aspect of the invention, a crop cutting device comprises a crop guiding surface including a plurality of substantially parallel slots extending in a direction of travel of the crop over the crop guiding surface; a plurality of knives arranged side-by-side and pivotally mounted below the crop guiding surface, wherein each knife is aligned with a respective slot and is pivotable about an axis extending substantially perpendicular to the slots between a retracted inoperative position in which it is located substantially below the crop guiding surface and an extended operative position, wherein at least a cutting edge of each knife projects above said guiding sur-face; a plurality of operating units, each operating unit being associated with a respective knife and each being configured to being operated to bring the associated knife from the retracted inoperative position into the extended operative position; a selector mechanism configured to selectively engage one or more of the plurality of operating units such that the respective knife can be brought from the retracted inoperative position into the extended operative position, the selector mechanism including a rotatable shaft extending substantially perpendicular to the slots between two side plates and carrying a plurality of engagement elements, each engagement element configured to engage with the respective operating unit; a first frame part and a second frame part pivotally connected to the first frame part around a selection pivot axis; wherein the side plates and the rotatable shaft are moveable with respect to the first frame part between a selection position and a working position, the selection position enabling a free rotation of the rotatable shaft in one direction, and the working position enabling an engagement of the engagement elements on the rotatable shaft with the respective operating unit; wherein the operating units are pivotably connected to the second frame part and engageable with the first frame part and moveable between the selection position and the working position by pivoting the first frame part with respect to the second frame part; wherein in the working position, the engagement elements of the rotatable shaft are configured to engage with the respective operating units, and wherein in the selection position, the engagement elements of the rotatable shaft are prevented from being engaged with the respective operating units.

Such a crop cutting device provides a reliable and secure selection procedure. Its structure is relatively simple and therefore easy to maintain. One particular advantage with respect to the prior art is that the operating units are all moved substantially in parallel and not separately which simplifies construction, e.g. with respect to EP 2 653 025 A1. Instead of two different positions for active and inactive operating units which is mechanically complex, all operating units remain substantially in one plane, independent of the number of knives selected by the selector mechanism.

In an advantageous embodiment, the first frame part may be configured as an inner frame part and the second frame part may be configured as an outer frame part. It should be noted that a different construction is also possible where the first frame part may be configured as the outer frame part, and the second frame part may be configured as the inner frame part. A key concept of this invention is thus the relative movement of a first frame part which includes the knife axis with respect to a second frame part which directly controls the movement of the operating units.

According to a preferred embodiment, each operating unit may comprise a bracket and that the engagement elements may comprise a plurality of arms wherein two arms are each configured to engage with the bracket of each operating unit. In this way, the selector mechanism ensures a safe engagement of each operating unit by engaging both sides of the operating unit with one arm each. Should one arm be bent or otherwise deformed, the second side still guarantees a proper engagement with the corresponding bracket of the operating unit.

In other embodiments, each operating unit may comprise a stop member configured to engage the engagement elements. This enables a retraction or disengagement of the operating units by a backward movement of the selector mechanism. In other words, the selector mechanism and particularly the rotatable shaft contributes significantly to the movement of each knife into the retracted in-operative position.

According to another embodiment, the crop cutting device may be configured that moving the first frame part with respect to the second frame part causes the operating units to engage with the first frame part and to disengage with the respective engagement elements of the rotatable shaft. This enables a lever action around a pivot axis of operating units; may be adapted depending on geometry of frames

Further, according to a beneficial embodiment the engagement elements of the rotatable shaft may be configured to rotate in one direction. Preferably, this rotation may be executed smoothly, i.e. without any predetermined steps during rotation, or with a predetermined number of steps. In certain embodiments, the rotation may click into a certain position which is predetermined for a certain number of knives to be selected. In preferred embodiments, the crop cutting device may comprise a plurality of holding devices, wherein in the selection position each holding device may be configured to cooperate with a respective operating unit to hold it in place. The holding device will enable certain operating units of non-selected knives to be held in place therefore preventing any of the non-selected operating units to move around loosely.

In other embodiments, the crop cutting device may include at least one actuator, preferably a hydraulic actuator. Such actuators may, for example, apply for: moving side plates including rotatable shaft (as part of selector mechanism); moving the first frame part with respect to second frame part, or vice versa; moving the first and second frame locked together so as to lift entire cutting device with respect to baler frame; or moving the selection actuator which may be located on one or on both sides of the crop cutting device. Other moveable or actuated parts of the crop cutting device may also comprise an actuator.

Advantageously, the at least one actuator may involve manual, electrical, electromechanical or hydraulic actuation.

In further embodiments, the plurality of engagement elements may comprise a star-shape having between two and ten arms, preferably between three and eight arms, most preferably four arms. With four arms, there are four possible positions of the engagement elements to be engaged with the brackets of the operating units such that there are four possible numbers of knives to be selected such as for example the full number of available knives, no knives at all, three quarters of all knives to be activated, and one quarter of all knives to be activated. Of course, other distributions or relations of the number of activated versus non-activated knives are possible.

In preferred embodiments, the arms may be equally spaced along the circumference of the rotatable shaft.

According to a further embodiment, the side plates of the selector mechanism may be configured wherein the rotatable shaft is located on a first position and wherein guiding means may be provided on a second position enabling guidance of the side plates in a long hole positioned on the first frame part. The shape of the side plates should therefore support all necessary positions of the rotatable shaft and therefore of all engagement elements with respect to the operating units and also with respect to the first and/or second frame part. As the side plates are a central point of attachment for any actuators responsible for the actuation of the selector mechanism they should be sturdy and sufficiently robust to perform these functions.

In another advantageous embodiment, the first frame part and the second frame part may be lockable with respect to each other so as to enable a common movement of the crop cutting device and/or to disable knife selection. Such a locking function may be beneficial if the operator of the crop cutting device intends to disable the selector mechanism. This provides added security, for example, if an operator situated in the cab of a tractor or a combine may switch this locking function on or off.

According to preferred embodiments, the first frame part and the second frame part may each include side elements outside of the crop guiding surface and transverse elements wherein the selection pivot axis may be located on the side elements. Such a structure has proven to be reliable and relatively easy to maintain. Of course, other constructions of the first part frame part and the second frame part are possible.

In a further embodiment, the guiding device may be included on the side elements of the first frame part and of the second frame part, preferably configured as a long hole. In this long hole, the side plates of the selector mechanism may be guided such that the actuation of the selection actuator may cause the side plates to be guided along the long hole.

The invention is now by example described under reference to the drawings in which:
- Fig. 1: is a perspective view of a preferred embodiment of the crop cutting device according to the invention in a first position;
- Fig. 2: is a perspective, cross-sectional view of the crop cutting device shown in Fig. 1;
- Fig. 3: is a perspective view of the preferred embodiment of the crop cutting device according to the invention in a second position;
- Fig. 4: is a perspective, cross-sectional view of the crop cutting device shown in Fig. 3;
- Fig. 5: is a perspective view of the preferred embodiment of the crop cutting device according to the invention in a third position;
- Fig. 6: is a perspective, cross-sectional view of the crop cutting device shown in Fig. 5;
- Fig. 7: is a perspective view of the preferred embodiment of the crop cutting device according to the invention in a fourth position;
- Fig. 8: is a perspective, cross-sectional view of the crop cutting device shown in Fig. 7;
- Fig. 9: is a perspective view of the preferred embodiment of the crop cutting device according to the invention in a fifth position; and
- Fig. 10: is a perspective, cross-sectional view of the crop cutting device shown in Fig. 9.

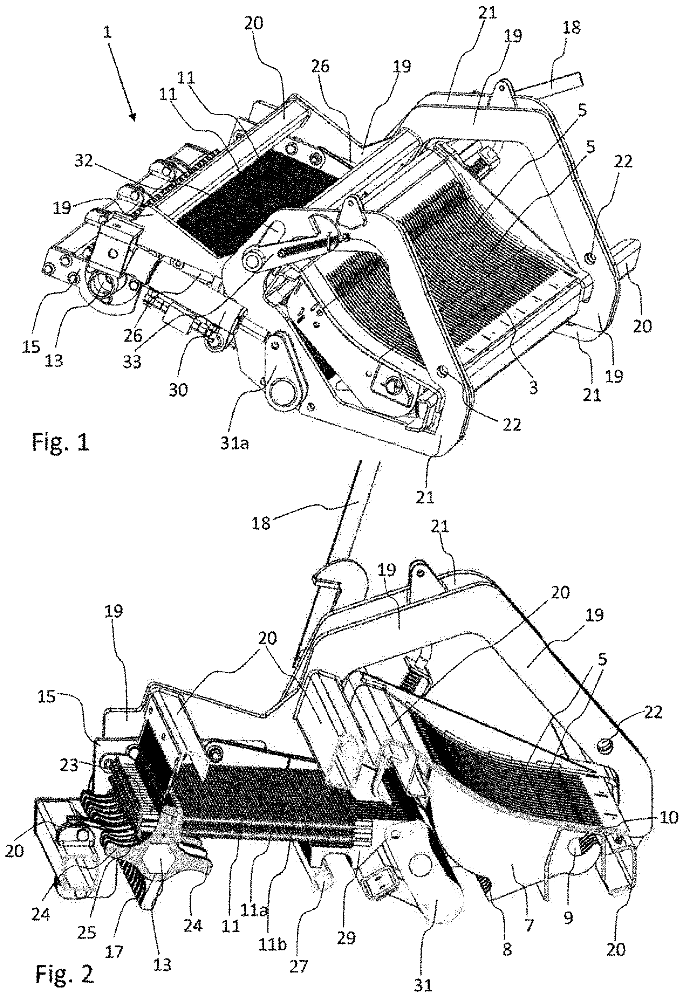

Fig. 1 shows in a perspective view a preferred embodiment of the crop cutting device according to the invention in a first position which can be called the home position. The crop cutting device 1 comprises a crop guiding surface 3 which includes a plurality of substantially parallel slots 5 extending in a direction of travel. As can be seen, the crop guiding surface 3 is slightly bent and has a concave shape in the direction of travel. In the shown embodiment, the crop cutting device 1 includes a first frame part 19 and a second frame part 21 which is pivotally connected to the first frame part 19 around a selection pivot axis 22. First frame part 19 and second frame part 21 are arranged as side elements enclosing the crop guiding surface 3 from opposite sides wherein a plurality of transverse frame elements 20 connects the left side element of first frame part 19 and second frame part 21 with the right side element of first frame part 19 and second frame part 21, respectively. It should be noted that selection pivot axis 22 is only shown as a hole in the figures. Any axis means such as a pin or shaft may be arranged therein such that first frame element 19 and second frame element 21 are enabled to pivot with respect to each other around selection pivot axis 22.

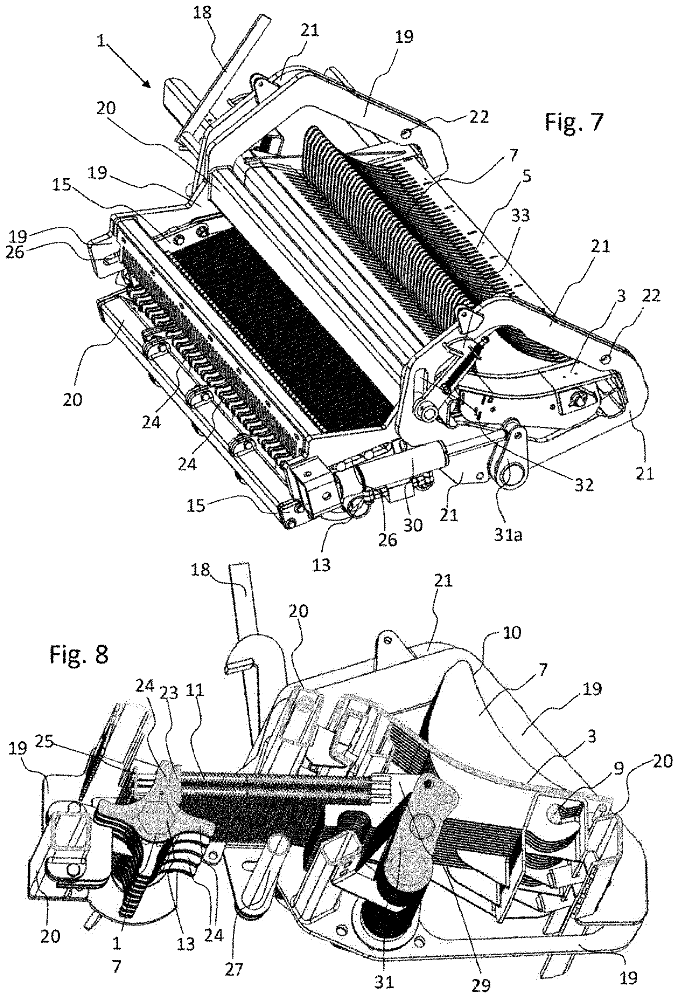

Below the crop guiding surface 3 is arranged a plurality of knives 7 side-by-side and pivotally mounted, wherein each knife 7 is aligned with the respective slot 5 and is pivotable about an axis extending substantially perpendicular to the slots 5 between a retracted inoperative position in which it is located substantially below the crop guiding surface 3 - the position shown in Figs. 1 and 2 - and an extended operative position, wherein at least a cutting edge 10 of each knife 7 projects above the crop guiding surface 3. It should be noted that the extended operative position will be explained hereinafter with reference to Figs. 7 to 10.

A plurality of operating units 11 extends substantially in parallel to the slots 5 substantially in the direction of travel, wherein each operating unit 11 is associated with a respective knife 7 and is configured to being operated to bring the associated knife 7 from the retracted inoperative position into the extended operative position. Each operating unit 11 may include in the shown embodiment a first spring-loaded rod 11a and a second spring-loaded rod 11b which are shown here as cylindrical rods enclosed by spring elements extending between the respective connected knife 7 on the one side and a bracket 23 on the other side. Other embodiments with one single spring-loaded rod or more than two springs are possible as well as other mechanisms having the same function. Each operating unit 11 is connected to an operating lever 31 on the knife side wherein an upper side of each operating lever 31 cooperates with an underside of each respective knife 7 such that in the extended operative position of a knife 7, the upper side of the operating lever 31 abuts a knife notch 8. As shown in Fig. 1, which for the knife section depicts the retracted inoperative position, none of the operating unit 11 is in contact with any of the knives 7 which are therefore retracted and inoperative. Furthermore, each operating unit 11 is arranged on a support member 29 wherein each support member 29 is pivotally connected to a corresponding operating lever 31. Each support member 29 furthermore comprises on the underside a notch which is configured to cooperate with a cross member 27 of first frame part 19. The function of this cross member 27 will be explained below.

In the following, the selector mechanism of the crop cutting device according to the invention will be explained in detail. The selector mechanism is configured to selectively engage one or more of the plurality of operating units 11 such that the respective knife 7 can be brought from the retracted inoperative position into the extended operative position. What is selected by the selector mechanism is therefore the number of knives which can be brought into the extended operative position. The selector mechanism includes a rotatable shaft 13 extending substantially perpendicular to the slots 5 between two side plates 15 which are substantially parallel to the side elements of first frame part 19. The rotatable shaft 13 carries a plurality of engagement elements 17 which in the shown embodiment are formed in a star-shape having four arms 24 each. In this embodiment, each engagement element 17 comprises two stars with four arms 24 wherein each of the arms 24 comprises an engagement surface which is configured to engage with a convex surface of a bracket 23 of each operating unit 11. In other words, the end of each engagement unit 11 is received between two arms 24 of each engagement element 17. It should be noted that there is a stop member 25 arranged at the end of each operating unit 11 wherein the stop member 25 is configured to engage with a surface which is on the opposite side of each engagement surface of each arm 24.

The selector mechanism may as shown in the embodiment of Fig. 1 comprise a hydraulic selection actuator which is connected on the one side to a pivotable actuation lever 31a and on the other side to one the two side plates 15. As shown in the embodiment, the selection actuator is configured to move the rotatable shaft 13 positioned on the side plates 15 such that each side plate 15 may be guided in a long hole 26 arranged on the first frame part 19. In the present preferred embodiment, long hole 26 is configured as a straight long hole, however, long hole 26 may assume curved or other configurations so as to guide the guiding means located on side plate 15 along a predetermined path.

The selector mechanism has therefore the following function: by actuating the selection actuator 30 the side plates 15 and the rotatable shaft 13 are movable with respect to the first frame part 19 between a selection position and a working position wherein the selection position enables a free rotation of the rotatable shaft 13 in one direction, and wherein the working position enables an engagement of the engagement element 17 on the rotatable shaft 13 with the respective operating unit 11. In the home position shown in Fig. 1 the engagement elements 17 are all engaged with a corresponding operating unit 11 such that the engagement surface of the engaging arm 24 engages with the convex surface of the corresponding bracket 23 of the respective operating unit 11. In the working position as shown, the engagement elements 17 of the rotatable shaft 13 engage with the respective operating units 11.

Another central function of the crop cutting device 1 according to the invention is the relative movement of the first frame part 19 with respect to the second frame part 21 as will be explained hereinafter. Pivoting the first frame part 19 with respect to the second frame part 21 will also cause the movement of the operating units 11 between the selection position and the working position. The reason for this is that the operating units 11 are pivotably connected to the second frame part 21 at their one end via support member 29. Furthermore, each operating unit 11 is engageable with the first frame part 19, namely with the cross member 27 on the underside of each support member 29 such that the pivot angle of each operating unit 11 is determined by the absolute displacement of the first frame part 19 with respect to the second frame part 21.

The same relative movement of the first frame part 19 with respect to the second frame part 21 is achievable by moving the shaft with which the actuator lever 31a is rotated relative to the first frame part 19. In other words, said shaft represents a portion of the here outer, second frame part 21. Thus, one of the key technical principles of the present invention is the relative movement of the first frame part 19 which includes the knife axis 9 with respect to the second frame part 19 containing the shaft or axis on which the actuator levers 31a for the movement of the operating units 11 are mounted.

This movement of the first frame part 19 with respect to the second frame part 21 can be seen in Fig. 1 by looking at guiding means 32 which is configured as a long hole arranged on second frame part 21. A pin attached to the first frame part 19 is guided within guiding means 32 such that the relative movement of both frame elements 19, 21 is limited by the length of the guiding means 32. In order to lock the movement of the first frame part 19 with respect to the second frame part 21, a locking device (not shown) is provided on the outer side of second frame part 21. The locking device has the effect that a locked state of both frame parts 19, 21 prevents any change from the selection position into the working position or vice versa. It is preferred that the actuation of the locking device may be performed remotely, i.e. for example from a cab of a tractor or agricultural machine operated by an operating person.

In Fig. 2 which is a cross-section view of the crop cutting device 1 shown in Fig. 1 from a different angle, some of the components relevant for the home position may be seen in detail. In the right hand side of figure 2 all knives 7 are in the retracted in-operative position located below the crop guiding surface 3 underneath each of the slots 5. Further, the selector mechanism is configured such that the rotating shaft 13 is in the working position meaning that the respective number of arms 24 of each engagement element 17 engages with a corresponding bracket 23 of the respective operating unit 11. First frame part 19 is displaced with respect to second frame part 21 such that all the operating units 11 are positioned in the working position, i.e. in the position that they are lowered with their ends sitting on the rotatable shaft 13.

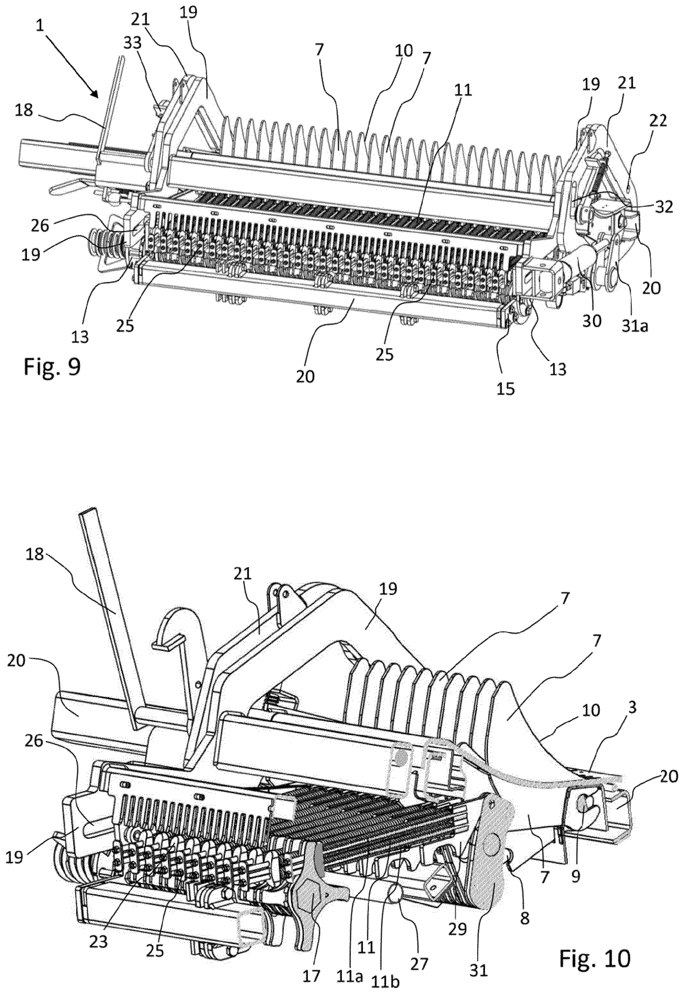

From this home position, the crop cutting device 1 may be brought into the extended operative position of the knives 7 by operating the selection actuator 30 such that the rotatable shaft 13 is moved substantially horizontally wherein the side plates 15 are guided within the long holes 26 as can later be seen with respect to Figs. 9 and 10.

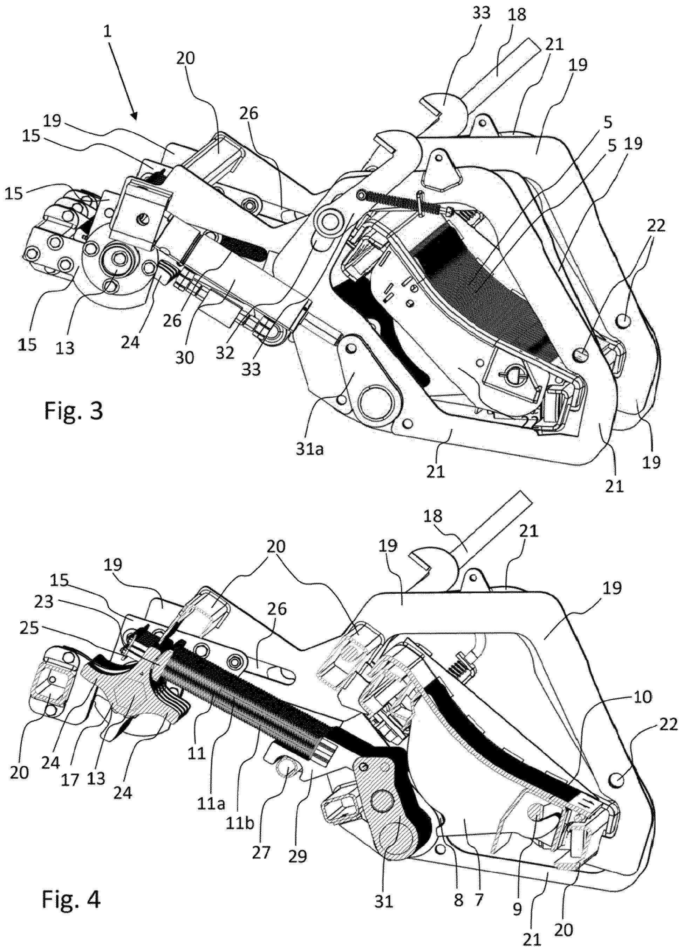

Figs. 3 and 4 show the crop cutting device 1 according to the preferred embodiment in a second position wherein Fig. 3 is a perspective view and Fig. 4 is a perspective cross sectional view. The second position is the position wherein, with respect to the home position shown in Figs. 1 and 2, the first frame part 19 and the second frame part 21 have been moved with respect to each other. This means that the procedure of selecting a different number of knives 7 with the selector mechanism is in process. In order to avoid extensive repetitions of identical descriptions only the differences of the second position with respect to the first position are explained in detail. The most obvious difference between the first and the second position is the movement of the first frame part 19 with respect to the second frame part 21. In other words, the relative movement of the first and second frame parts 19, 21 around selection pivot axis 22 has been performed at about 50%. This is significant movement can also be seen in figure 4, particularly when looking at the underside of the operating units 11 where it can be noticed that cross member 27 as a portion of first frame part 19 now abuts the recess in support member 29 of each operating unit 11 such that the plurality of operating units 11 has been pivoted around its fixed pivot point such that the engaging ends of the operating units 11 are beginning to disengage from the engagement elements 17 of the rotatable shaft 13. It should be noted that lifting the first frame part 19 with respect to the second frame part 21 also means that the side plates 15 which are fixed and guided with respect to the first frame part 19 are also slightly lifted. In this second position, the portion relating to the knives 7, slots 5 and the crop guiding surface 3 remains essentially unchanged.

It should be noted that the second position shown in figures 3 and 4 is an intermediate position which under normal circumstances will not be permanently assumed by the crop cutting device according to the invention. Therefore, the second position serves 4 illustrates purposes in order to facilitate the understanding of the present invention.

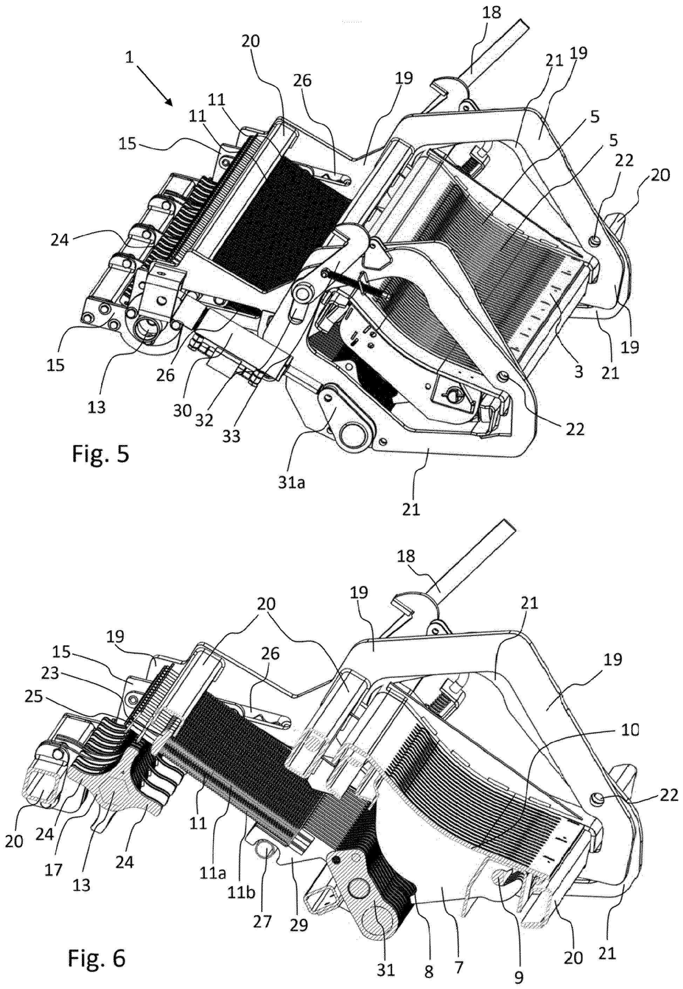

Figs. 5 and 6 show the crop cutting device 1 according to the preferred embodiment in a third position where in Fig. 5 is a perspective view and Fig. 4 is a perspective cross sectional view. Again, to avoid unnecessary repetitions this description only refers to the differences between the third position and the first/second position of the crop cutting device 1. In Fig. 5 it can clearly be seen that the first frame part 19 is now to the full extent displaced with respect to the second frame parts 21. As can be obtained from the central portion of Fig. 5, the axis of lever 33 is in its upper position within the guiding means 32. Furthermore and consequently, the operating units 11 are now in an even more slanted position because the cross member 27 of first frame part 19 has pushed the support members 29 of the operating units 11 upwards. For the selector mechanism this means that all arms 24 of the engagement elements 17 of the rotatable shaft 13 are now disengaged from the operating units 11, i.e. they are no longer engaged with the bracket 23 of the operating unit 11. In this third position, the rotatable shaft 13 is now able to rotate freely so as to adjust the position of each engagement element 17 on the rotatable shaft 13. In the shown embodiment, the operator of the crop cutting device has now the possibility to select a different position of each engagement element 17 in order to increase or to decrease the number of selected knives 7. This can be done by an actuator or manually by the operator.

The operating units 11 which are in the third position supported from below by cross member 27 may be additionally retained in this position by a holding device or a plurality of holding devices configured to cooperate with the respective operating unit 11. In a preferred embodiment, the holding device may be positioned on the first frame part 19, for example on a transverse frame element 20. Such a holding device prevents an unwanted accidental down-movement of an operating unit 11 onto any of the engagement elements 17.In this way it is insured that the selection procedure can be smoothly performed. It must be noted that the crop cutting device 1 of this preferred embodiment may be locked in this third position by the locking device. Such locking may also occur in the first position shown in Figs. 1 and 2. The third position of the crop cutting device 1 of this embodiment is therefore characterized by the selector mechanism not being in engagement, i.e. the rotatable shaft 13 with its engagement elements 17 is prevented from being engaged with any of the operating units 11. This is achieved by the relative displacement of the first frame part 19 with respect to the second frame part 21 which are maximally displaced as can be seen in Figs. 5 and 6. Further, the rotatable shaft 13 may be adjusted in this position so that the selected number of knives 7 will be correctly extended once the crop cutting device 1 is in operating position. Finally, the knife bed of the crop cutting device 1 is configured such that all knives 7 are retracted in this third position.

Figs. 7 and 8 show the crop cutting device 1 according to the invention in the preferred embodiment in a fourth position wherein Fig. 7 is a perspective view and Fig. 8 is a perspective cross-sectional view. In the fourth position all knives 7 have been selected by the selector mechanism and are also in the extended operative position wherein the cutting edge 10 of each knife 7 protrudes well beyond the crop cutting surface 3 of the crop cutting device 1. The position of the first frame part 19 and the second frame part 21 with respect to each other is the same as in the first position, i.e. the operating unit 11 are positioned relatively flat and engage with the engagement element 17 of the rotatable shaft 13 wherein the concave engagement surface of the respective arms 24 engages with the convex surface of the corresponding bracket 23. In addition, the side plates 15 supporting the rotatable shaft 13 with its engagement elements 17 is fully extended towards the knives 7 such that the operating units 11 engage on the knife and with the respective undersides of the knives 7 which moves each knife 7 through the respective slot 5 beyond the crop cutting surface 3. This extended operative position of all knives 7 can clearly be seen in Fig. 7 and Fig. 8. The movement of the side plates 15 and consequently the rotatable shaft 13 along long hole 26 is effected by selection actuator 30. The actuation of selection actuator 30 can be seen by comparing the position of actuator lever 31a in Fig. 7 with the respective position in Fig. 1, or alternatively, by comparing the positions of the rotatable shaft 13 with respect to the leftmost transverse frame element 20 in Fig. 7 and Fig. 1.

The extended operative position of all knives 7 into the crop channel triggers the security function of the operating units 11 with their spring-loaded rods 11a, 11b. This protection system allows the knives 7 to swing back towards the crop guiding surface 3 on encountering a foreign body like a stone or brick in the crop channel. The knives 7 are in engagement with the support member 29 which pushes back onto the springs of the spring-loaded rods 11a, 11b in the case of an encounter. In this fourth position shown in Figs. 7 and 8, all knives 7 of the crop cutting device 1 extend beyond the crop guiding surface. This means that the selector mechanism is configured such that all arms 24 of all engagement elements 17 engage with the respective records 23 of an operating unit 11. In other words, the engagement elements 17 of the rotatable shaft 13 are all designed to engage with a respective operating unit 11.

Figs. 9 and 10 show the crop cutting device 1 according to the invention in the preferred embodiment in a fifth position wherein Fig. 9 is a perspective view and Fig. 10 is a perspective cross-sectional view. In the fifth position, the number of extended knifes in the extended operative position is lower than in the fourth position depicted in Figs. 7 and 8, namely exactly half. This is achieved by selecting a different configuration of engagement elements 17 on the rotatable shaft 13. The position of the first frame part 19 and the second frame part 21 and also of the selection actuator 30 in Figs. 9 and 10 is identical to their position in Figs. 7 and 8. Therefore, the description of those components is not repeated. The difference can clearly be seen in Fig. 10 wherein only every second operating unit 11 is engaged with a corresponding engagement element 17. While all operating units 11 remain essentially in the same plane, every second operating unit remains in the retracted position, unengaged by the engagement elements 17. For those retracted operating units 11, there is no arm 24 engaging the bracket 23. It must be noted that the number of extended/retracted knives 7 is determined by the configuration of the engagement elements 17 on the rotatable shaft 13. In the shown embodiment, the engagement elements 17 comprise the shape of a four-arm star such that four different number configurations are possible, for example 25%, 50%, 75% and 100% of all available knives 7.

With the present invention, a crop cutting device has been provided which enables a smooth, safe and remotely controllable knife selection, which requires little installation space and which generally ensures a reliable and secure cutting function also in a very dusty environment.

### List of reference numbers:

- 1: crop cutting device
- 3: crop guiding surface
- 5: slots
- 7: knives
- 8: knife notch
- 9: knife axis
- 10: cutting edge
- 11: operating unit
- 11a: first spring-loaded rod
- 11b: second spring-loaded rod
- 13: rotatable shaft
- 15: side plate
- 17: engagement element
- 18: attachment bracket
- 19: first frame part
- 20: transverse frame element
- 21: second frame part
- 22: selection pivot axis
- 23: bracket
- 24: arm
- 25: stop member
- 26: long hole
- 27: cross member
- 29: support member
- 30: selection actuator
- 31: operating lever
- 31a: actuator lever
- 32: guiding means
- 33: lever

## Claims

1. Crop cutting device (1) comprising:
a crop guiding surface (3) including a plurality of parallel slots (5) extending in a direction of travel of the crop over the crop guiding surface (3);
a plurality of knives (7) arranged side-by-side and pivotally mounted below the crop guiding surface (3), wherein each knife (7) is aligned with a respective slot (5) and is pivotable about a knife axis (9) extending perpendicular to the slots (5) between a retracted inoperative position in which it is located below the crop guiding surface (3) and an extended operative position, wherein at least a cutting edge (10) of each knife (7) projects above said guiding surface (3);
a plurality of operating units (11), each operating unit (11) being associated with a respective knife (7) and each being configured to being operated to bring the associated knife (7) from the retracted inoperative position into the extended operative position;
a selector mechanism configured to selectively engage one or more of the plurality of operating units (11) such that the respective knife (7) can be brought from the retracted inoperative position into the extended operative position;
a first frame part (19) and a second frame part (21) pivotally connected to the first frame part (19) around a selection pivot axis (22);
the crop cutting device (1) being **characterised in that**:
the selector mechanism including a rotatable shaft (13) extending perpendicular to the slots (5) between two side plates (15) and carrying a plurality of engagement elements (17), each engagement element (17) configured to engage with the respective operating unit (11);
wherein the side plates (15) and the rotatable shaft (13) are moveable with respect to the first frame part (19) between a selection position and a working position, the selection position enabling a free rotation of the rotatable shaft (13) in one direction, and the working position enabling an engagement of the engagement elements (17) on the rotatable shaft (13) with the respective operating unit (11);
wherein the operating units (11) are pivotably connected to the second frame part (21) and engageable with the first frame part (19) and moveable between the selection position and the working position by pivoting the first frame part (19) with respect to the second frame part (21);
wherein in the working position, the engagement elements (17) of the rotatable shaft (13) are configured to engage with the respective operating units (11), and wherein in the selection position, the engagement elements (17) of the rotatable shaft (13) are prevented from being engaged with the respective operating units (11).

2. Crop cutting device (1) according to claim 1, **characterized in that** the first frame part (19) is configured as an inner frame part and the second frame part (21) is configured as an outer frame part.

3. Crop cutting device (1) according to any of the previous claims, **characterized in that** each operating unit (11) comprises a bracket (23) and that the engagement elements (17) comprise a plurality of arms (24) wherein two arms (24) are each configured to engage with the bracket (23) of each operating unit (11).

4. Crop cutting device (1) according to any of the previous claims, **characterized in that** each operating unit (11) comprises a stop member (25) configured to engage the engagement elements (17).

5. Crop cutting device (1) according to any of the previous claims, **characterized in that** it is configured that moving the first frame part (19) with respect to the second frame part (21) causes the operating units (11) to engage with the first frame part (19) and to disengage with the respective engagement elements (17) of the rotatable shaft (13).

6. Crop cutting device (1) according to any of the previous claims, **characterized in that** the engagement elements (17) of the rotatable shaft (13) are configured to rotate in one direction.

7. Crop cutting device (1) according to any of the previous claims, **characterized in that** it comprises a plurality of holding devices, wherein in the selection position each holding device is configured to cooperate with a respective operating unit (11) to hold it in place.

8. Crop cutting device (1) according to any of the previous claims, **characterized in that** it includes at least one actuator (30), preferably a hydraulic actuator.

9. Crop cutting device (1) according to claim 8, **characterized in that** the at least one actuator involves manual, electrical, electromechanical or hydraulic actuation.

10. Crop cutting device (1) according to any of the previous claims, **characterized in that** the plurality of engagement elements (17) comprises a star-shape having between two and ten arms (24), preferably between three and eight arms (24), most preferably four arms (24).

11. Crop cutting device (1) according to claim 10, **characterized in that** the arms (24) are equally spaced along the circumference of the rotatable shaft (13).

12. Crop cutting device (1) according to any of the previous claims, **characterized in that** the side plates (15) of the selector mechanism are configured wherein the rotatable shaft (13) is located on a first position and wherein guiding means are provided on a second position enabling guidance of the side plates (15) in a long hole (26) positioned on the first frame part (19).

13. Crop cutting device (1) according to any of the previous claims, **characterized in that** the first frame part (19) and the second frame part (21) are lockable with respect to each other so as to enable a common movement of the crop cutting device (1) and/or to disable knife selection.

14. Crop cutting device (1) according to any of the previous claims, **characterized in that** the first frame part (19) and the second frame part (21) each include side elements outside of the crop guiding surface (3) and transverse frame elements (20) wherein the selection pivot axis (22) is located on the side elements.

15. Crop cutting device (1) according to claim 14, **characterized in that** it comprises a guiding device on the side elements of the first frame part (19) and of the second frame part (21), preferably configured as a long hole (32).

## Patentansprüche

1. Erntegutschneidvorrichtung (1) mit:
einer Erntegutführungsfläche (3), die eine Mehrzahl von parallelen Schlitzen (5) umfasst, die sich entlang einer Bewegungsrichtung des Ernteguts über die Erntegutführungsfläche (3) erstrecken;
einer Mehrzahl von Messern (7), die nebeneinander angeordnet und schwenkbar unter der Erntegutführungsfläche (3) befestigt sind, wobei jedes Messer (7) in Bezug zu einem entsprechenden Schlitz (5) ausgerichtet ist und um eine Messerachse (9), die sich senkrecht zu den Schlitzen (5) erstreckt, zwischen einer zurückgezogenen, nicht betriebsbereiten Position, in der es unter der Erntegutführungsfläche (3) angeordnet ist, und einer ausgefahrenen, betriebsbereiten Position, in der mindestens eine Schneidkante (10) jedes Messers (7) über die Führungsfläche (3) ragt, schwenkbar ist;
einer Mehrzahl von Betätigungseinheiten (11), wobei jede Betätigungseinheit (11) zu einem entsprechenden Messer (7) gehört und dazu eingerichtet ist, betätigt zu werden, um das zugehörige Messer (7) von der zurückgezogenen, nicht betriebsbereiten Position in die ausgefahrene, betriebsbereite Position zu versetzen;
einem Auswahlmechanismus, der dazu eingerichtet ist, eine oder mehrere der Mehrzahl von Betätigungseinheiten (11) wahlweise in Eingriff zu bringen, so dass das entsprechende Messer (7) von der zurückgezogenen, nicht betriebsbereiten Position in die ausgefahrene, betriebsbereite Position gebracht werden kann;
einem ersten Rahmenteil (19) und einem zweiten Rahmenteil (21), das schwenkbar mit dem ersten Rahmenteil (19) um eine Auswahlschwenkachse (22) herum verbunden ist;
wobei die Erntegutschneidvorrichtung (1) **dadurch gekennzeichnet ist, dass**:
der Auswahlmechanismus eine drehbare Welle (13) umfasst, die sich senkrecht zu den Schlitzen (5) zwischen zwei Seitenplatten (15) erstreckt und die eine Mehrzahl von Eingreifelementen (17) trägt, wobei jedes Eingreifelement (17) dazu eingerichtet ist, mit der entsprechenden Betätigungseinheit (11) ineinander zu greifen;
wobei die Seitenplatten (15) und die drehbare Welle (13) in Bezug zu dem ersten Rahmenteil (19) zwischen einer Auswahlposition und einer Arbeitsposition bewegbar sind, wobei die Auswahlposition eine freie Drehung der drehbaren Welle (13) in eine Richtung ermöglicht und die Arbeitsposition ein Eingreifen der Eingreifelemente (17) an der drehbaren Welle (13) in Bezug zu der Betätigungseinheit (11) ermöglicht;
wobei die Betätigungseinheiten (11) schwenkbar mit dem zweiten Rahmenteil (21) verbunden und mit dem ersten Rahmenteil (19) in Eingriff bringbar sind und mittels Schwenken des ersten Rahmenteils (19) in Bezug zu dem zweiten Rahmenteil (21) zwischen der Auswahlposition und der Arbeitsposition bewegbar sind;
wobei in der Arbeitsposition die Eingreifelemente (17) der drehbaren Welle (13) dazu eingerichtet sind, mit den entsprechenden Betätigungseinheiten (11) ineinander zu greifen, und wobei in der Auswahlposition die Eingreifelemente (17) der drehbaren Welle (13) daran gehindert werden, mit den entsprechenden Betätigungseinheiten (11) ineinander zu greifen.

2. Erntegutschneidvorrichtung (1) nach Anspruch 1, **dadurch gekennzeichnet, dass** das erste Rahmenteil (19) als ein inneres Rahmenteil ausgebildet ist und das zweite Rahmenteil (21) als ein äußerer Rahmenteil ausgebildet ist.

3. Erntegutschneidvorrichtung (1) nach einem der vorhergehenden Ansprüche, **dadurch gekennzeichnet, dass** jede Betätigungseinheit (11) eine Halterung (23) aufweist und dass die Eingreifelemente (17) eine Mehrzahl von Armen (24) aufweisen, wobei die zwei Arme (24) jeweils dazu eingerichtet sind, mit der Halterung (23) jeder Betätigungseinheit (11) einzugreifen.

4. Erntegutschneidvorrichtung (1) nach einem der vorhergehenden Ansprüche, **dadurch gekennzeichnet, dass** jede Betätigungseinheit (11) ein Anschlagelement (25) aufweist, das dazu eingerichtet ist, mit den Eingreifelementen (17) ineinander zu greifen.

5. Erntegutschneidvorrichtung (1) nach einem der vorhergehenden Ansprüche, **dadurch gekennzeichnet, dass** sie dazu eingerichtet ist, dass ein Bewegen des ersten Rahmenteils (19) in Bezug zu dem zweiten Rahmenteil (21) die Betätigungseinheiten (11) dazu veranlasst, mit dem ersten Rahmenteil (19) zusammenzuwirken und von den Eingreifelementen (17) der drehbaren Welle (13) außer Eingriff zu kommen.

6. Erntegutschneidvorrichtung (1) nach einem der vorhergehenden Ansprüche, **dadurch gekennzeichnet, dass** die Eingreifelemente (17) der drehbaren Welle (13) dazu eingerichtet sind, sich in eine Richtung zu drehen.

7. Erntegutschneidvorrichtung (1) nach einem der vorhergehenden Ansprüche, **dadurch gekennzeichnet, dass** sie eine Mehrzahl von Haltevorrichtungen aufweist, wobei in der Auswahlposition jede Haltevorrichtung dazu eingerichtet, mit einer entsprechenden Betätigungseinheit (11) zusammenzuwirken, um deren Anordnung beizubehalten.

8. Erntegutschneidvorrichtung (1) nach einem der vorhergehenden Ansprüche, **dadurch gekennzeichnet, dass** sie des Weiteren zumindest eine Betätigungseinrichtung (30), vorzugsweise eine hydraulische Betätigungseinrichtung, aufweist.

9. Erntegutschneidvorrichtung (1) nach Anspruch 8, **dadurch gekennzeichnet, dass** die zumindest eine Betätigungseinrichtung eine manuelle, eine elektrische, eine elektromechanische oder eine hydraulische Betätigungseinrichtung umfasst.

10. Erntegutschneidvorrichtung (1) nach einem der vorhergehenden Ansprüche, **dadurch gekennzeichnet, dass** die Mehrzahl von Eingreifelementen (17) eine Sternform aufweist, die zwischen zwei und zehn Arme (24), vorzugsweise zwischen drei und acht Arme (24), am meisten bevorzugt vier Arme (24) aufweist.

11. Erntegutschneidvorrichtung (1) nach Anspruch 10, **dadurch gekennzeichnet, dass** die Arme (24) gleichmäßig entlang des Umfangs der drehbaren Welle (13) verteilt sind.

12. Erntegutschneidvorrichtung (1) nach einem der vorhergehenden Ansprüche, **dadurch kennzeichnet, dass** die Seitenplatten (15) des Auswahlmechanismus dazu eingerichtet sind, wenn die drehbare Welle (13) in der ersten Position angeordnet ist und wenn die Führungsmittel in einer zweiten Position bereitgestellt sind, eine Führung der Seitenplatten (15) in einem Langloch (26), das in dem ersten Rahmenteil (19) angeordnet ist, zu ermöglichen.

13. Erntegutschneidvorrichtung (1) nach einem der vorhergehenden Ansprüche, **dadurch kennzeichnet, dass** das erste Rahmenteil (19) und das zweite Rahmenteil (21) in Bezug zueinander feststellbar sind, so dass eine gemeinsame Bewegung der Erntegutschneidvorrichtung (1) ermöglicht und/oder eine Messerauswahl unterbunden ist.

14. Erntegutschneidvorrichtung (1) nach einem der vorhergehenden Ansprüche, **dadurch gekennzeichnet, dass** das erste Rahmenteil (19) und das zweite Rahmenteil (21) jeweils Seitenelemente außerhalb der Erntegutführungsfläche (3) und Querrahmenelemente (20) umfassen, wobei die Auswahlschwenkachse (22) an den Seitenelementen angeordnet ist.

15. Erntegutschneidvorrichtung (1) nach Anspruch 14, **dadurch gekennzeichnet, dass** es eine Führungsvorrichtung an den Seitenelementen des ersten Rahmenteils (19) und des zweiten Rahmenteils (21) aufweist, die vorzugsweise als ein Langloch (32) ausgebildet ist.

## Revendications

1. Dispositif de coupe de récolte (1) comprenant :
une surface de guidage de récolte (3) comprenant une pluralité de fentes (5) parallèles s'étendant dans le sens de déplacement de la récolte sur la surface de guidage de récolte (3) ;
une pluralité de couteaux (7) disposés côte à côte et montés de manière pivotante sous la surface de guidage de récolte (3), dans lequel chaque couteau (7) est aligné par rapport à une fente (5) respective et peut pivoter autour d'un axe de couteau (9) s'étendant perpendiculairement aux fentes (5) entre une position rétractée inopérante dans laquelle il est situé sous la surface de guidage de récolte (3) et une position fonctionnelle étendue, dans laquelle au moins un bord tranchant (10) de chaque couteau (7) fait saillie au-dessus de ladite surface de guidage (3) ;
une pluralité d'unités de fonctionnement (11), chaque unité de fonctionnement (11) étant associée à un couteau (7) respectif et chacune étant configurée pour être actionnée afin d'amener le couteau (7) associé de la position rétractée inopérante à la position étendue fonctionnelle ;
un mécanisme de sélection configuré pour engager de manière sélective une ou plusieurs parmi la pluralité d'unités de fonctionnement (11) de sorte que le couteau (7) respectif puisse être amené de la position rétractée inopérante à la position étendue fonctionnelle ;
une première partie de châssis (19) et une seconde partie de châssis (21) raccordée de manière pivotante à la première partie de châssis (19) autour d'un axe de pivotement de sélection (22) ;
le dispositif de coupe de récolte (1) est **caractérisé en ce que** :
le mécanisme de sélection comprend un arbre rotatif (13) s'étendant perpendiculairement aux fentes (5) entre deux plaques latérales (15) et portant une pluralité d'éléments de mise en prise (17), chaque élément de mise en prise (17) étant configuré pour s'engager avec l'unité de fonctionnement respective (11) ;
dans lequel les plaques latérales (15) et l'arbre rotatif (13) peuvent être déplacés par rapport à la première partie de châssis (19) entre une position de sélection et une position de travail, la position de sélection permettant une rotation libre de l'arbre rotatif (13) dans un sens, et la position de travail permettant un engagement des éléments de mise en prise (17) sur l'arbre rotatif (13) avec l'unité de fonctionnement (11) respective ;
dans lequel les unités de fonctionnement (11) sont raccordées de manière pivotante à la seconde partie de châssis (21) et peuvent être engagées avec la première partie de châssis (19) et peuvent être déplacées entre la position de sélection et la position de travail en faisant pivoter la première partie de châssis (19) par rapport à la seconde partie de châssis (21) ;
dans lequel, en position de travail, les éléments de mise en prise (17) de l'arbre rotatif (13) sont configurés pour s'engager avec les unités de fonctionnement (11) respectives, et dans lequel, en position de sélection, les éléments de mise en prise (17) de l'arbre rotatif (13) ne peuvent pas s'engager avec les unités de fonctionnement (11) respectives.

2. Dispositif de coupe de récolte (1) selon la revendication 1, **caractérisé en ce que** la première partie de châssis (19) est configurée comme une partie intérieure de châssis et que la seconde partie de châssis (21) est configurée comme une partie extérieure de châssis.

3. Dispositif de coupe de récolte (1) selon l'une quelconque des revendications précédentes, **caractérisé en ce que** chaque unité de fonctionnement (11) comprend un support (23) et **en ce que** les éléments de mise en prise (17) comprennent une pluralité de bras (24) dans lesquels deux bras (24) sont chacun configurés pour s'engager avec le support (23) de chaque unité de fonctionnement (11).

4. Dispositif de coupe de récolte (1) selon l'une quelconque des revendications précédentes, **caractérisé en ce que** chaque unité de fonctionnement (11) comprend un élément de butée (25) configuré pour s'engager dans les éléments de mise en prise (17).

5. Dispositif de coupe de récolte (1) selon l'une quelconque des revendications précédentes, **caractérisé en ce qu'**il est configuré pour que le déplacement de la première partie de châssis (19) par rapport à la seconde partie de châssis (21) entraîne l'engagement des unités de fonctionnement (11) avec la première partie de châssis (19) et son désengagement avec les éléments de mise en prise (17) respectifs de l'arbre rotatif (13).

6. Dispositif de coupe de récolte (1) selon l'une des revendications précédentes, **caractérisé en ce que** les éléments de mise en prise (17) de l'arbre rotatif (13) sont configurés pour pivoter dans un sens.

7. Dispositif de coupe de récolte (1) selon l'une quelconque des revendications précédentes, **caractérisé en ce qu'**il comprend une pluralité de dispositifs de maintien, dans lequel, dans la position de sélection, chaque dispositif de maintien est configuré pour coopérer avec une unité de commande (11) respective pour la maintenir en place.

8. Dispositif de coupe de récolte (1) selon l'une quelconque des revendications précédentes, **caractérisé en ce qu'**il comporte au moins un actionneur (30), de préférence un actionneur hydraulique.

9. Dispositif de coupe de récolte (1) selon la revendication 8, **caractérisé en ce que** l'au moins un actionneur implique un actionnement manuel, électrique, électromécanique ou hydraulique.

10. Dispositif de coupe de récolte (1) selon l'une quelconque des revendications précédentes, **caractérisé en ce que** la pluralité d'éléments de mise en prise (17) comprend une forme d'étoile comptant entre deux et dix bras (24), de préférence entre trois et huit bras (24), de manière préférée entre toutes quatre bras (24).

11. Dispositif de coupe de récolte (1) selon la revendication 10, **caractérisé en ce que** les bras (24) sont également espacés le long de la circonférence de l'arbre rotatif (13).

12. Dispositif de coupe de récolte (1) selon l'une quelconque des revendications précédentes, **caractérisé en ce que** les plaques latérales (15) du mécanisme de sélection sont configurées de sorte que l'arbre rotatif (13) se trouve dans une première position et que des moyens de guidage sont prévus dans une seconde position pour permettre de guider les plaques latérales (15) dans un long orifice (26) placé sur la première partie de châssis (19).

13. Dispositif de coupe de récolte (1) selon l'une quelconque des revendications précédentes, **caractérisé en ce que** la première partie de châssis (19) et la seconde partie de châssis (21) peuvent être verrouillées l'une par rapport à l'autre de manière à permettre un mouvement commun du dispositif de coupe de récolte (1) et/ou à désactiver la sélection des couteaux.

14. Dispositif de coupe de récolte (1) selon l'une quelconque des revendications précédentes, **caractérisé en ce que** la première partie de châssis (19) et la seconde partie de châssis (21) comprennent chacune des éléments latéraux à l'extérieur de la surface de guidage de récolte (3) et des éléments de châssis transversaux (20) dans lesquels l'axe de pivotement de sélection (22) est situé sur les éléments latéraux.

15. Dispositif de coupe de récolte (1) selon la revendication 14, **caractérisé en ce qu'**il comprend un dispositif de guidage sur les éléments latéraux de la première partie de châssis (19) et de la seconde partie de châssis (21), de préférence configuré comme un long orifice (32).
